# EUROPEAN PATENT SPECIFICATION

(11) **EP 2 525 119 B1**
(45) Date of publication and mention of the grant of the patent: **10.12.2014**
(21) Application number: 11166657.4
(22) Date of filing: 19.05.2011
(51) Int. Cl.: F16H 59/04, F16H 61/36

(54) **Gear shift assembly for manual transmission**
Gangschalteinrichtung für manuelles Getriebe
Dispositif de changement de vitesses pour boîte de vitesses manuelle

(43) Date of publication of application: 21.11.2012
(73) Proprietor: Volvo Car Corporation, 40 531 Göteborg (SE)
(72) Inventor: Stojanovski, Toni, 41762, Göteborg (SE)
(74) Representative: Kraenzmer, Martin

(56) References cited:
- EP-A1- 0 486 361
- EP-A1- 2 098 758
- CN-Y- 2 742 237
- DE-A1- 2 033 999
- US-A- 2 762 234
- US-A- 5 005 411

## Description

### TECHNICAL FIELD

The present invention relates to a shifter for manual transmissions for vehicles.

### BACKGROUND ART

A shifter transmits the select and shift motion of a shift lever to the select and shift linkage of a transmission. Traditionally this is done by levers in a pivot point. The linkage is connected to the levers with a joint, which is able to stand the rotational movement of the levers. Such joints are obviously more expensive than a simple stiff joint. Further, due to the swinging motion of the levers, the size of the shifter must be of a certain length in order to get a decent lever effect. It is desired to get rid of the flexible joints and also to decrease the space needed for the shifter, in order to give place for other functions of facilities.

Document DE 2 033 999 A constitutes the closest prior art to the subject-matter of claim 1. It discloses a gear shift assembly for a gear box of an automobile, comprising a shift lever arranged to pivot about a pivot point having two pivot axes, the pivoting motion of the shift lever about a first pivot axis and the pivoting motion of the shift lever about a second pivot axis being decoupled from each other, wherein said shift lever is provided with a gearing mechanism about its pivot point, so that the pivoting motion about the first pivot axis can be transmitted to a first linkage of the gear box over a first gear rack and the pivoting motion about the second pivot axis can be transmitted to a second linkage of the gear box over a second gear rack, wherein said gearing mechanism comprises a first gear, which is arranged rotationally fixed on a first shaft with its axis of rotation aligned with said first pivot axis, and a second gear which is arranged rotationally fixed on a second shaft with its axis of rotation aligned with said second pivot axis, in such a way that the pivoting motion about the first pivot axis turns said first gear and the pivoting motion about the second pivot axis turns said second gear, wherein said first gear transmits the pivoting motion about the first pivot axis to the first gear rack, and wherein said second gear transmits the pivoting motion about the second pivot axis to the second gear rack.

### SUMMARY

The object of the present invention is to provide an inventive gear shifter for a manual transmission which is compact in its design.

This object is achieved by a gear shift assembly with the features of claim 1. Said gear shift assembly comprises a shift lever arranged to pivot about a pivot point having two pivot axes. A first axis represents a gear select axis and a second axis represents a gear shift axis. The shift lever is able to move in a gear shift pattern that includes at least one gear select gate arranged in a first direction, and at least one gear shift gate arranged in a second direction essentially perpendicular to the gear select gate, and whereby the gear select motion and the gear shift motion are decoupled from each other.

Said shift lever is provided with a gearing mechanism about its pivot point, such that the gear select motion is transmitted to a selection linkage and the gear shift motion is transmitted to a shifting linkage of the gear box over a first and a second gear rack respectively.

The selection and the shifting linkage could be a cable or a rod, which both are common in vehicles.

Using a gear mechanism in the shift assembly instead of traditional levers for the select or the shift motion reduces the space needed for the gear shift mechanism, whereby said space can be used for other purposes, such as accessories for the driver compartment. Hence, using a gearing mechanism for both the select and the shift motion reduces the space for the gear shift mechanism even more. By transmitting the motion of the shift lever over a gear mechanism with gear racks to the shift cables, the attachment of the shift linkage becomes easy, because the gear racks performs a linear movement, and not a swinging/rotational movement as a lever.

The gearing mechanism of the gear shift assembly comprises at least a first gear, which is arranged with its axis of rotation aligned with said first pivot axis, such that a select motion of the shift lever turns said first gear, wherein said first gear transmits the select motion of the shift lever to the first gear rack.

To enable the shift motion to be transmitted to the gear box, said gearing mechanism comprises a second gear, which is arranged with its axis of rotation aligned with said second pivot axis, such that a shift motion of the shift lever turns said second gear, wherein said second gear transmits the shift motion of the shift lever to the second gear rack.

It is advantageous that both said first gear rack and said second gear rack are arranged parallel with each other. This is achieved in that at least one of said first and said second gear or any other gear between said first or second gear and their respective gear rack is a first bevel gear, wherein it is possible to change the direction of the select or shift motion with 90 degrees. With this arrangement it is possible to reduce the space for the gear shifting assembly even more, because the gear racks can extend in the same direction.

To achieve said 90 degree direction change of the select or shift motion, said first bevel gear acts upon a second bevel gear, wherein the second bevel gear is arranged with a pinion gear acting on the corresponding gear rack, such that a turning of the second bevel gear results in a translation of the corresponding gear rack. The pinion gear can be the second bevel gear itself or a separate pinion gear arranged with the second bevel gear such that it rotates therewith, obviously a costume gear, with the bevel gear and the straight pinion gear as one part is also possible.

The gears in the gear shift assembly can be designed as full gear wheels. However, because the gears in the gear shift assembly does not make any full revolutions, the gears can beneficially be designed as gear wheel segments, in order to save material costs, save space and to reduce the weight of the assembly. The size of the gear wheel segments has to be adapted for the movement of the individual gears.

A high transmission ratio between the first gears and the respective gear rack is achievable through a big difference in gear size. The gear can however be held smaller, if one or several additional gears are provided between the first gears and the respective gear rack.

A suggested pivot point for the inventive shift assembly comprises:
- a spherical end of said shift lever, wherein said spherical end has a pin arranged opposite said shift lever,
- a first shaft arranged perpendicular to said shift lever, which first shaft is adapted to hold said first gear,
- a second shaft arranged perpendicular to said shift lever and said first shaft, and which second shaft is adapted to hold said second gear,
wherein said first and second shafts have :
- a cup-shaped section, in which said spherical end is adapted to fit, and
- an in length direction of respective shaft elongated opening in said cup-shaped section and,
wherein first and second shafts are arranged such that one elongated opening surrounds the shift lever and the other said pin, whereby by tilting the shift lever in the length direction of said first shaft, said second shaft turns, and by tilting the shift lever in the length direction of said second shaft, said first shaft turns. The described pivot point enables a separation of the select and shift movement. The pivot point is compact and involves a small number of parts. A separate carrier is not needed, because the pivot point can be carried in one of the cup shaped sections.

Another suggested pivot point for the inventive shift assembly comprises:
- a spherical end of said shift lever, wherein said spherical end has a pin arranged opposite said shift lever,
- a fixed carrier having a circular opening adapted to fit said spherical end such that it can be supported therein,
- a first shaft arranged perpendicular to said shift lever, which first shaft is adapted to hold said first gear,
- a second shaft arranged perpendicular to said shift lever and said first shaft, and which second shaft is adapted to hold said second gear,
wherein said first and second shafts have:
- an essentially U-shaped section, which is adapted to be arranged below said carrier, wherein one of the U-shaped sections is arranged below the other, and
- an elongated opening in said U-shaped section and in length direction of respective shaft,
wherein first and second shafts are arranged such that said elongated openings surround said pin, whereby by tilting the shift lever in the length direction of said first shaft, said second shaft turns, and by tilting the shift lever in the length direction of said second shaft, said first shaft turns.

To enhance the selecting and shifting feeling when using the inventive shift assembly a plunger can be applied such that its first end acts on said pivot point of the shift lever and its second end acts on a guide slit, such that the shifting force needed to control the gear shift assembly is adjusted.

### BRIEF DESCRIPTION OF THE DRAWINGS

The present invention will now be described in detail with reference to the figures, wherein:
- Figure 1: shows a schematic overview drawing of the inventive shifting assembly;
- Figure 2: shows a schematic drawing of a gearing of a select motion;
- Figure 3: shows a schematic drawing of a first embodiment of the pivot point according to the invention; and
- Figure 4: shows a schematic drawing of a second embodiment of the pivot point according to the invention; and
- Figure 5: shows a schematic drawing of a not claimed pivot point

### DETAILED DESCRIPTION

In the following embodiments of the invention are shown and described, simply by way of illustration of possible modes of carrying out the invention.

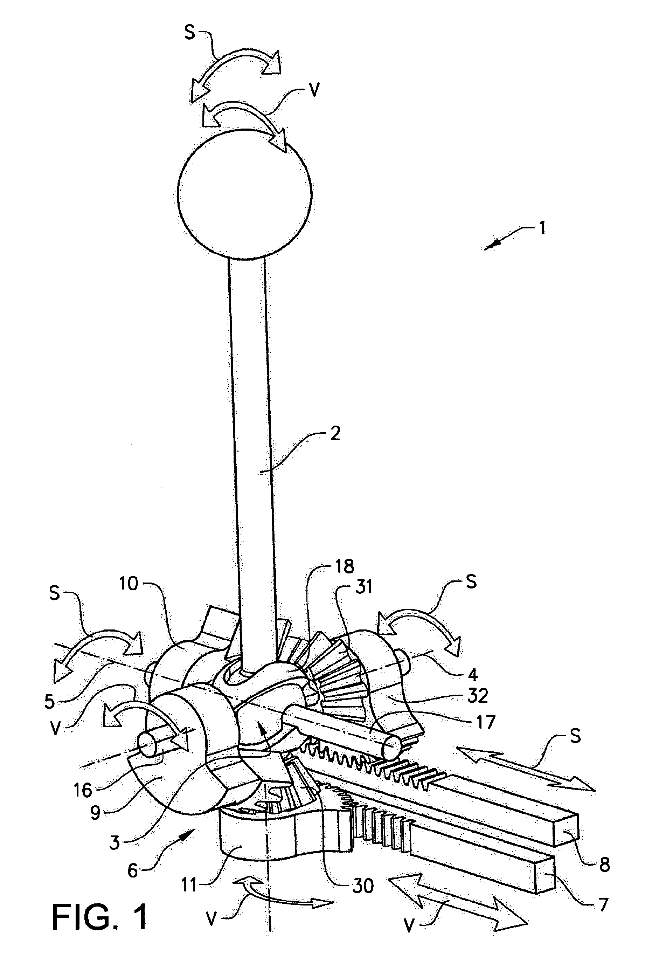

Figure 1 shows an overview of a gear shift assembly 1 according to the invention. The gear shift assembly 1 is adapted for a controlling a gear box of an automobile. The gear shift assembly 1 comprises a shift lever 2 arranged to pivot about a pivot point 3. Said pivot point 3 is provided with first and second pivot axes 4, 5. Said first axis 4 represents a gear select axis and said second axis 5 represents a gear shifting axis. The shift lever 2 can be pivoted about said pivot point 3 such that it is moved in a gear shift pattern that includes at least one gear select gate arranged in a first direction, i.e. parallel with said second axis 5, wherein said first axis is turned; and at least one gear shift gate arranged in a second direction, i.e. parallel with said first axis 4, wherein said second axis 5 is turned.

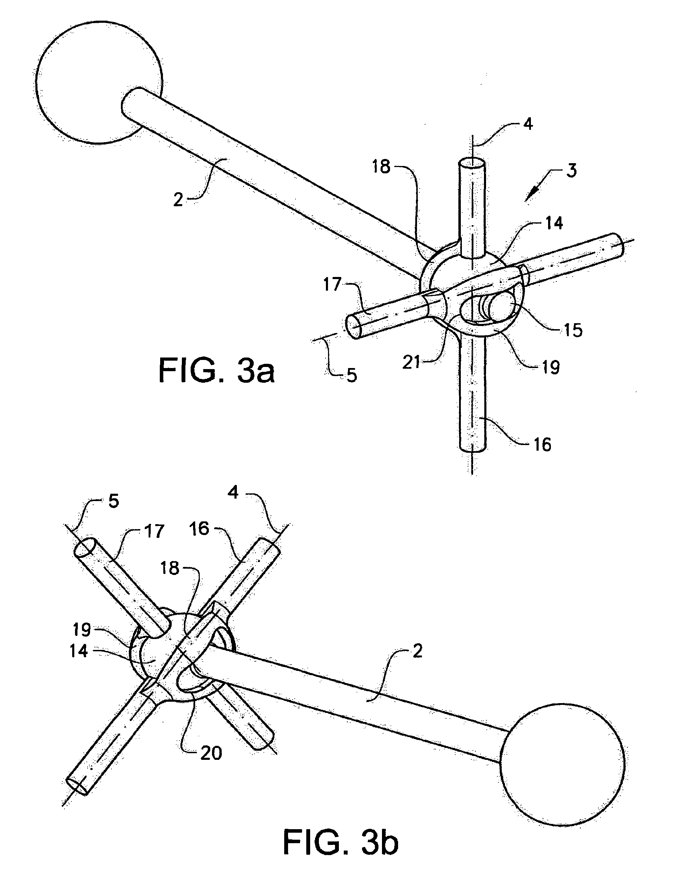

The pivot point 3 separates the gear select motion and the gear shift motion and this is further explained in conjunction with figure 3, 4 and 5.

A gearing mechanism 6 is arranged about the pivot point 3 such that a gear select and gear shift motion v, s can be transmitted to a gear select and a gear shift linkage of a transmission respectively. Embodiments of the gearing mechanism 6 will be described further below.

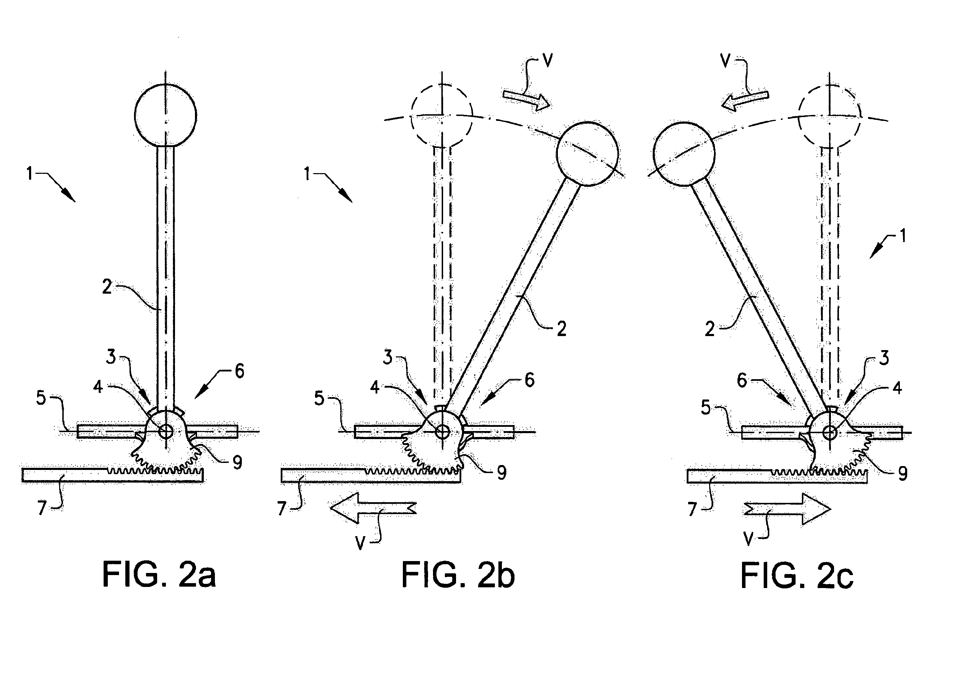

The drawing of figure 2a, b and c shows the basic principle of a gearing mechanism 6 transmitting the pivoting select motion of the shift lever 2 to a translating movement of the gear rack 7. In fig. 2a the shift lever 2 is in a neutral position, whereby by tilting the shift lever 2 to the right about the pivot axis 4 (perpendicular to the plane of the 2-D drawing) in the pivot point 3, the gear 9 transmits this motion into a translating movement of the gear rack 7 to the left, this is shown in fig. 2b. In fig. 2c a corresponding motion is shown when the shift lever 2 is tilted to the left, whereby the gear rack 7 performs a translating movement to the right. A gear ratio of the gear mechanism 6 can be changed by different sizes of the gear 9 and/or one or several intermediate gears.

The principle of the gearing mechanism 6 described above for the select motion can also be applied for the shift motion, whereby the shift lever 3 is tilted about the pivot axis 5 and a second gear 10 (not shown in fig. 2) transmits the shift motion to the second gear rack 8 (not shown in fig. 2) which performs a translating movement. However, to enable that the translational movements of both gear racks 7, 8 are parallel with each other a bevel gear must be included in the gearing mechanism 6 for at least one of the select or shift motion.

Further, as the gear 9 just performs a partial revolution, costs can be saved in material by just having a gear wheel segment 9 instead of a whole gear wheel. This can be applied for all suitable gears in the gearing mechanism 6. Further, one or several intermediate gears can be arranged between the first and the second gear 9, 10 and their respective gear rack 7, 8 in order to increase the gear ratio.

In figure 3a and b a beneficial pivot point 3 is disclosed, which comprises a spherical end 14 of the shift lever 2. A pin 15 is arranged on the spherical end 14 opposite said shift lever 2. A first shaft 16 is arranged perpendicular to said shift lever 2, which first shaft 16 is adapted to hold said first gear 9 (not shown in figure 3). The first shaft 16 is centred about the first pivot axis 4. A second shaft 17 is arranged perpendicular to said shift lever 2 and said first shaft 16 and wherein the second shaft 17 is adapted to hold the second gear 10.

Both the first and the second shafts 16, 17 are provided with a cup-shaped section 18, 19, in which said spherical end 14 is adapted to fit. Further in each of said first and second cup-shaped sections 18, 19 an elongated opening 20, 21 is provided, which opening 20, 21 is arranged in the length direction of respective shaft 16, 17.

The first and second shafts 16, 17 are arranged such that the elongated opening 20 of the first shaft 16 surrounds the shift lever 2 and the elongated opening 21 of the second shaft 17 surrounds the pin 15. Due to this arrangement the select and shift motions v, s are separated. When the shift lever 2 is tilted about the first pivot axis 4 the first shaft 16 is turned, whereby the pin 15 slides in the elongated opening of the second shaft 17, which thereby stays in its position, and when the shift lever 2 is tilted about the second pivot axis 5 the second shaft 17 is turned, whereby the shift lever 2 slides in the elongated opening of the first shaft 16, which thereby stays in its position.

With this design of the pivot point 3, the shift lever is carried by the cup shaped sections 18, 19 of the first and second shafts 16, 17, because the spherical end 14 rests therein. Further, by providing the pin 15 with a non circular shape, a rotation of the shift lever 2 can be prevented, if the elongated opening 21 in which it slides is adapted to smallest thickness of the pin 15.

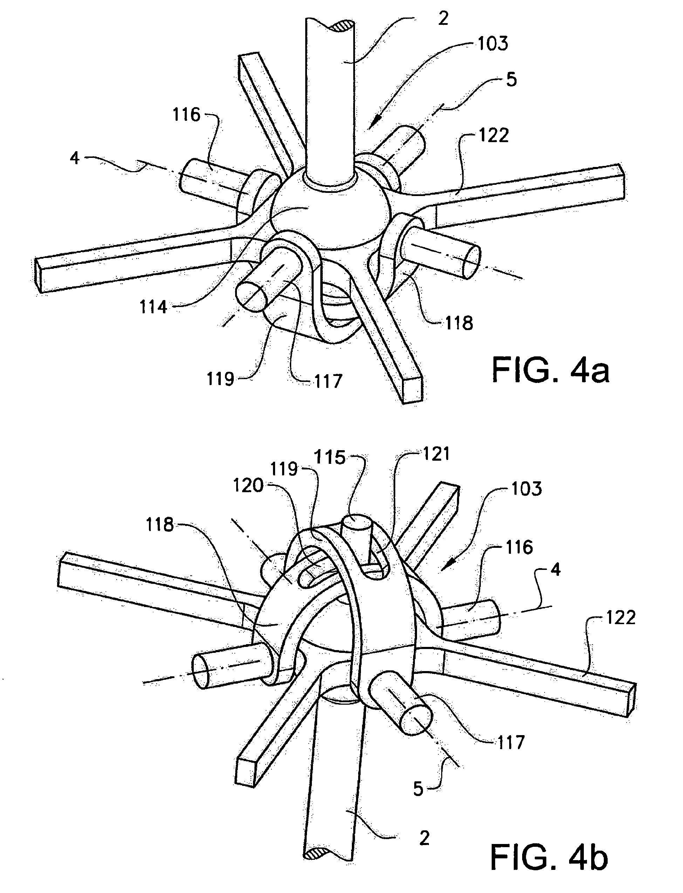

Another embodiment of the pivot point 103 is shown in figure 4. In opposition to the pivot point 3 in figure 3, the spherical end 114 of the pivot point 103 is arranged in a fixed carrier 122. The fixed carrier 122 functions as a bearing in which the spherical end 114 rests. The spherical end 114 however, still has a pin 115 arranged opposite the shift lever 2.

A first shaft 116 is arranged perpendicular to the shift lever 2 and is adapted to hold said first gear 9 (not shown). A second shaft 117 is arranged perpendicular to said shift lever 2 and said first shaft 116 and is adapted to hold said second gear 10 (not shown).

Both the first and second shafts 116, 117 have an essentially U-shaped section 118, 119, which is adapted to be arranged below said carrier 122, wherein one of the U-shaped sections 118 is arranged below the other 119. An elongated opening 120, 121 is arranged in respective U-shaped section 118, 119 and in length direction of respective shaft 116, 117.

The first and second shafts 116, 117 are arranged such that said elongated openings 120, 121 surround said pin 115, whereby by tilting the shift lever 2 in the length direction of said first shaft 116, said second shaft 117 turns, and by tilting the shift lever 2 in the length direction of said second shaft 117, said first shaft 116 turns.

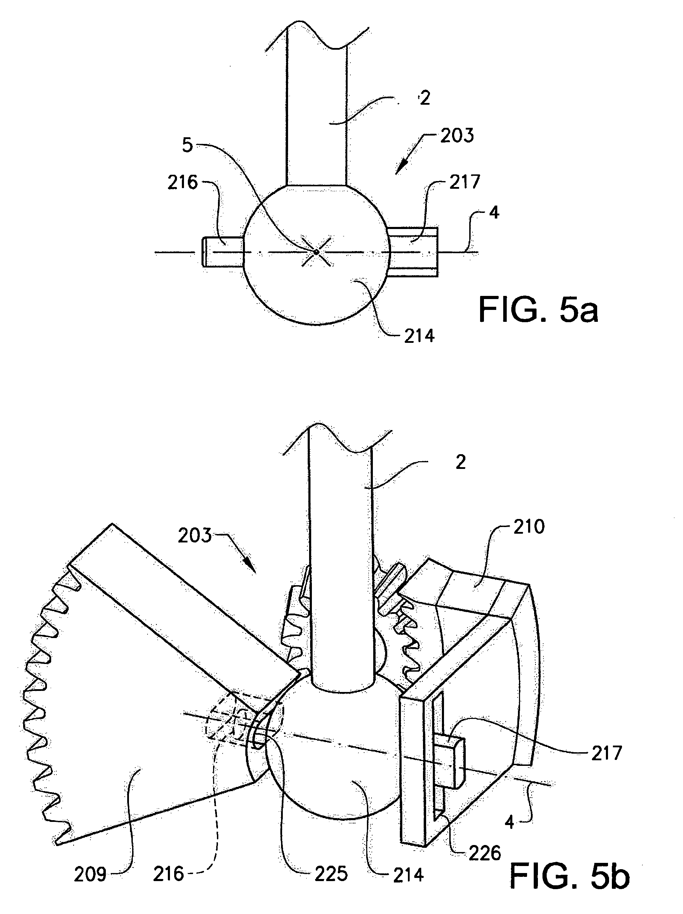

A not claimed pivot point 203 is shown in the figures 5a- 5b.

This not claimed pivot point 203 comprises a spherical end 214 of said shift lever 2, said spherical end 214 having a first and a second shaft 216, 217 both arranged centred about a first pivot axis 4.

The first shaft 216 is provided with a circular cross section and the second shaft 217 is provided with a flat cross section. Because of the differences in cross sections between the first and second cross sections a separation between the select and shift motions v, s is possible. One of the first or second gear 209, 210 is provided with a first opening 225 in which said first shaft 216 is arranged, and the other one of the first or second gear 209, 210 is provided with an elongated opening 226 in which said second shaft 217 is arranged.

The relation between said openings 225, 226 and the corresponding first and second shafts 216, 217 is such that by pivoting the spherical end 214 about the second pivot axis 5 said first gear rotates and said second shaft 217 slides within said elongated opening 226 and by pivoting the spherical end 214 about said first pivot axis 4, said second gear 210 is rotating and said first shaft 216 is rotating within said first opening 225.

Which of the first and the second gear 209, 210 is adapted to be arranged on the circular shaft 216 and which is adapted to be arranged on the flat shaft 217 can be varied and is not essential for the function of the pivot point 203.

An advantage with the pivot point 203 is that it involves fewer parts than the other two pivot points 3, 103.

Now the advantageous embodiment of the gearing mechanism 6 shown in figure 1 is described. The gearing mechanism 6 is arranged about the pivot point 3, which is the embodiment of the pivot point 3 shown in figure 3.

The select motion v is shown with the arrows marked "v" and the shift motion s is shown with the arrows marked "s".

First the select motion v will be described. In the figure the select motion v is performed by tilting the shift lever 2 about the pivot axis 4. The first gear 9, which is arranged rotationally fixed on the shaft 16 of the pivot point 3, will thereby rotate and transmit the select motion v to the gear rack 7 over an intermediate gear 30 and a pinion gear 11. In this embodiment, the first gear 9 is a bevel gear wheel segment, and the pinion gear 11 is arranged such that it rotates with the intermediate gear 30. As can be seen in figure 1, the first gear 9 is a bevel gear, which meshes with the intermediate gear 30, which also is a bevel gear. The fixed connection between the intermediate gear 30 and the pinion gear 11 forces the pinion gear to rotate together with the intermediate gear 30. The direction of the movement is however thereby not redirected, instead, the design with bevel gears facilitates a compact design, in which the first and second gear racks 7, 8 can be placed closely together.

The shift motion s is performed by tilting the shift lever 2 about the pivot axis 5. The second gear 10, which is arranged rotationally fixed on the shaft 17 of the pivot point 3 will thereby rotate and transmit the shift motion s to the gear rack 8 over an intermediate gear 31 and a pinion gear 32. In this embodiment the second gear 10 is a bevel gear wheel segment, and the pinion gear 32 is arranged such that it rotates with the intermediate gear 31. As can be seen in the figure, the second gear 10 is a bevel gear, which meshes with the intermediate gear 31, whereby the direction of the shift motion s is changed, with 90 degrees. Due to the change of direction of the shift motion s, the gear rack 8 can extend and move in the same directions as the gear rack 7 performing the select motion v, thereby creating a more compact shift assembly 1. The intermediate gear 31 and the pinion gear 32 are rotatably arranged on the first shaft 16.

The pivoting select and shift movements v, s of the shift lever 2 are thereby transformed to translational movements of the gear racks 7,8. The translational movement of the gear rack 7 is easily transmitted to a select linkage (not shown) of the transmission, such as a select cable or rod. In difference to the traditional levers used in shift assemblies, which have a swinging/rotational movement, the movement of the gear racks 7, 8 is a pure translational movement, whereby the connection between the gear rack 7 and the select linkage can be stiff.

Obviously, different pivot points 3 can be used and any suitable number of intermediate gears can be used in the inventive shift assembly 1 without deviating from the invention.

By using gear segments instead of full gear wheels, where appropriate, material costs and weight can be saved.

As will be realised, the invention is capable of modification in various obvious respects, all without departing from the scope of the appended claims. Accordingly, the drawings and the description thereto are to be regarded as illustrative in nature, and not restrictive.

## Claims

1. A gear shift assembly (1) for a gear box of an automobile, comprising:
- a shift lever (2) arranged to pivot about a pivot point (3, 103) having two pivot axes (4, 5), wherein a first pivot axis (4) represents a gear selection axis and a second pivot axis (5) represents a gear shifting axis, and
- a gear shift pattern that includes at least one gear select gate arranged in a first direction, and at least one gear shift gate arranged in a second direction essentially perpendicular to the at least one gear select gate,
wherein a gear shift motion (s) in the direction of the at least one gear shift gate and a gear select motion (v) in the direction of the at least one gear select gate can be performed by pivoting the shift lever (2), the gear select motion (v) and the gear shift motion (s) being decoupled from each other,
wherein said shift lever (2) is provided with a gearing mechanism (6) about its pivot point (3, 103), so that the gear select motion (v) can be transmitted to a selection linkage of the gear box over a first gear rack (7) and the gear shift motion (s) can be transmitted to a shifting linkage of the gear box over a second gear rack (8),
wherein said gearing mechanism (6) comprises at least a first gear (9) which is arranged rotationally fixed on a first shaft (16, 116) with its axis of rotation aligned with said first pivot axis (4), and a second gear (10) which is arranged rotationally fixed on a second shaft (17, 117) with its axis of rotation aligned with said second pivot axis (5), in such a way that the gear select motion (v) of the shift lever (2) turns said first gear (9) and the gear shift motion (s) of the shift lever (2) turns said second gear (10)
wherein said first gear (9) transmits the gear select motion (v) of the shift lever (2) to the first gear rack (7), and
wherein said second gear (10) transmits the gear shift motion (s) of the shift lever (2) to the second gear rack (8) over an intermediate gear (31) which is rotatably arranged on the first shaft (16, 116).

2. A gear shift assembly (1) according to claim 1, wherein said first gear rack (7) is arranged parallel to said second gear rack (8), and at least one of said first and second gears (9, 10) is a bevel gear.

3. A gear shift assembly (1) according to claim 2, wherein said bevel gear (9, 10) acts upon another bevel gear (30, 31) which is arranged with a pinion gear (11, 32), in such a way that a turning of said other bevel gear (30, 31) results in a translation of the respective gear rack (7, 8).

4. A gear shift assembly (1) according to any one of the preceding claims, wherein said first and second gears (9, 10) are full gear wheels or gear segments.

5. A gear shift assembly (1) according to any one of the preceding claims, wherein one or several additional gears (30, 11) are provided between the first gear (9) and the first gear rack (7) and/or several additional gears (31, 32) are provided between the second gear (10) and the second gear rack (8).

6. A gear shift assembly (1) according to any one of the preceding claims, wherein said pivot point (3) comprises:
• a spherical end (14) of said shift lever (2), wherein said spherical end (14) has a pin (15) arranged opposite said shift lever (2),
• the first shaft (16) which is arranged perpendicular to said shift lever (2), the second shaft (17) which is arranged perpendicular to said shift lever (2) and said first shaft (16),
wherein each of said first and second shafts (16, 17) has:
• a cup-shaped section (18, 19), in which said spherical end (14) is adapted to fit, and
• an elongated opening (20, 21) in said cup-shaped section (18, 19) and in length direction of the respective shaft,
wherein said first and second shafts (16, 17) are arranged in such a way that one (20) of said elongated openings surrounds said shift lever (2) and the other (21) of said elongated openings surrounds said pin (15), whereby by tilting the shift lever (2) in the length direction of said first shaft (16), said second shaft (17) turns, and by tilting the shift lever (2) in the length direction of said second shaft (17), said first shaft (16) turns.

7. A gear shift assembly (1) according to any one of claims 1-5, wherein said pivot point (103) comprises:
• a spherical end (114) of said shift lever (2), wherein said spherical end (114) has a pin (115) arranged opposite said shift lever (2),
• a fixed carrier (122) having a circular opening in which said spherical end (114) is adapted to fit so that it can be supported therein,
• the first shaft (116) which is arranged perpendicular to said shift lever (2), and
• the second shaft (117) which is arranged perpendicular to said shift lever (2) and said first shaft (116),
wherein each of said first and second shafts (116, 117) has:
• an essentially U-shaped section (118, 119), which is adapted to be arranged below said carrier (122), wherein one of the U-shaped sections (119) is arranged below the other (118), and
• an elongated opening (120, 121) in said U-shaped section and in length direction of the respective shaft (116, 117),
wherein said first and second shafts (116, 117) are arranged in such a way that said elongated openings (120, 121) surround said pin (115), whereby by tilting the shift lever (2) in the length direction of said first shaft (116), said second shaft turns (117), and by tilting the shift lever (2) in the length direction of said second shaft (117), said first shaft (116) turns.

8. A gear shift assembly (1) according to any one of the preceding claims, further comprising a plunger having a first end acting on said pivot point (3, 103) of said shift lever (2) and a second end acting on a guide slit, in such a way that the shifting force needed to control the gear shift assembly (1) is adjusted.

9. Vehicle provided with a gear shift assembly (1) according to any one of the preceding claims.

## Patentansprüche

1. Gangschaltanordnung (1) für einen Getriebekasten eines Kraftfahrzeugs, die Folgendes umfasst:
- einen Schalthebel (2), der angeordnet ist, um einen Schwenkpunkt (3, 103) zu schwenken, der zwei Drehachsen (4, 5) besitzt, wobei eine erste Drehachse (4) eine Gangauswahlachse darstellt und eine zweite Drehachse (5) eine Gangschaltachse darstellt, und
- ein Gangschaltmuster, das mindestens eine Gangauswahlkulisse, die in einer ersten Richtung angeordnet ist, und mindestens eine Gangschaltkulisse, die in einer zweiten Richtung, die im Wesentlichen senkrecht zu der mindestens einen Gangauswahlkulisse ist, angeordnet ist, aufweist,
wobei durch Schwenken des Schalthebels (2) eine Gangschaltbewegung (s) in der Richtung der mindestens einen Gangschaltkulisse und eine Gangauswahlbewegung (v) in der Richtung der mindestens einen Gangauswahlkulisse durchgeführt werden kann, wobei die Gangauswahlbewegung (v) und die Gangschaltbewegung (s) voneinander entkoppelt sind,
wobei der Schalthebel (2) mit einem Getriebemechanismus (6) um seinen Schwenkpunkt (3, 103) versehen ist, so dass die Gangauswahlbewegung (v) über eine erste Zahnstange (7) an ein Auswahlgestänge des Getriebekastens übertragen werden kann und die Gangschaltbewegung (s) über eine zweite Zahnstange (8) an ein Schaltgestänge des Getriebekastens übertragen werden kann,
wobei der Getriebemechanismus (6) mindestens ein erstes Zahnrad (9), das auf einer ersten Welle (16, 116) drehfest angeordnet ist, wobei seine Drehachse auf die erste Schwenkachse (4) ausgerichtet ist, und ein zweites Zahnrad (10), das auf einer zweiten Welle (17, 117) drehfest angeordnet ist, wobei seine Drehachse auf die zweite Schwenkachse (5) ausgerichtet ist, auf eine Weise umfasst, dass die Gangauswahlbewegung (v) des Schalthebels (2) das erste Zahnrad (9) dreht und die Gangschaltbewegung (s) des Schalthebels (2) das zweite Zahnrad (10) dreht,
wobei das erste Zahnrad (9) die Gangauswahlbewegung (v) des Schalthebels (2) an die erste Zahnstange (7) überträgt und
wobei das zweite Zahnrad (10) die Gangschaltbewegung (s) des Schalthebels (2) über ein Zwischenzahnrad (31), das drehbar auf der ersten Welle (16, 116) angeordnet ist, an die zweite Zahnstange (8) überträgt.

2. Gangschaltanordnung (1) nach Anspruch 1, wobei die erste Zahnstange (7) parallel zu der zweiten Zahnstange (8) angeordnet ist und das erste und/oder das zweite Zahnrad (9, 10) ein Kegelrad ist.

3. Gangschaltanordnung (1) nach Anspruch 2, wobei das Kegelrad (9, 10) auf ein weiteres Kegelrad (30, 31) wirkt, das mit einem Ritzel (11, 32) in der Weise angeordnet ist, dass ein Drehen des weiteren Kegelrades (30, 31) zu einer translatorischen Bewegung der entsprechenden Zahnstange (7, 8) führt.

4. Gangschaltanordnung (1) nach einem der vorhergehenden Ansprüche, wobei das erste und das zweite Zahnrad (9, 10) vollständige Zahnräder oder Zahnradesegmente sind.

5. Gangschaltanordnung (1) nach einem der vorhergehenden Ansprüche, wobei ein oder mehrere zusätzliche Zahnräder (30,11) zwischen dem ersten Zahnrad (9) und der ersten Zahnstange (7) vorgesehen sind und/oder mehrere zusätzliche Zahnräder (31, 32) zwischen dem zweiten Zahnrad (10) und der zweiten Zahnstange (8) vorgesehen sind.

6. Gangschaltanordnung (1) nach einem der vorhergehenden Ansprüche, wobei der Schwenkpunkt (3) Folgendes umfasst:
• ein kugelförmiges Ende (14) des Schalthebels (2), wobei das kugelförmige Ende (14) einen Stift (15) besitzt, der gegenüber von dem Schalthebel (2) angeordnet ist,
• die erste Welle (16), die senkrecht zu dem Schalthebel (2) angeordnet ist,
• die zweite Welle (17), die senkrecht zu dem Schalthebel (2) und der ersten Welle (16) angeordnet ist,
wobei die erste und die zweite Welle (16, 17) jeweils Folgendes besitzen:
• einen schalenförmigen Abschnitt (18, 19), wobei das kugelförmige Ende (14) so beschaffen ist, dass es darin eingesetzt werden kann, und
• eine verlängerte Öffnung (20, 21) in dem schalenförmigen Abschnitt (18, 19) und in der Längsrichtung der entsprechenden Welle,
wobei die erste und die zweite Welle (16, 17) in der Weise angeordnet sind, dass eine (20) der verlängerten Öffnungen den Schalthebel (2) umgibt und die andere (21) der verlängerten Öffnungen den Stift (15) umgibt, wobei sich durch Kippen des Schalthebels (2) in die Längsrichtung der ersten Welle (16) die zweite Welle (17) dreht und sich durch Kippen des Schalthebels (2) in die Längsrichtung der zweiten Welle (17) die erste Welle (16) dreht.

7. Gangschaltanordnung (1) nach einem der Ansprüche 1-5, wobei der Schwenkpunkt (103) Folgendes umfasst:
• ein kugelförmiges Ende (114) des Schalthebels (2), wobei das kugelförmige Ende (114) einen Stift (115) besitzt, der gegenüber von dem Schalthebel (2) angeordnet ist,
• einen festen Träger (122), der eine kreisförmige Öffnung hat, in die das kugelförmige Ende (114) geeignet ist, zu passen, so dass es darin getragen werden kann,
• die erste Welle (116), die senkrecht zu dem Schalthebel (2) angeordnet ist, und
• die zweite Welle (117), die senkrecht zu dem Schalthebel (2) und der ersten Welle (116) angeordnet ist,
wobei die erste und die zweite Welle (116, 117) jeweils Folgendes besitzen:
• einen im Wesentlichen U-förmigen Abschnitt (118, 119), der dafür ausgelegt ist, unter dem Träger (122) angeordnet zu sein, wobei einer der U-förmigen Abschnitte (119) unter dem anderen (118) angeordnet ist, und
• eine verlängerte Öffnung (120, 121) in dem U-förmigen Abschnitt und in der Längsrichtung der entsprechenden Welle (116, 117),
wobei die erste und die zweite Welle (116, 117) in der Weise angeordnet sind, dass die verlängerten Öffnungen (120, 121) den Stift (115) umgeben, wobei sich durch Kippen des Schalthebels (2) in der Längsrichtung der ersten Welle (116) die zweite Welle (117) dreht und sich durch Kippen des Schalthebels (2) in der Längsrichtung der zweiten Welle (117) die erste Welle (116) dreht.

8. Gangschaltanordnung (1) nach einem der vorhergehenden Ansprüche, die ferner einen Stößel umfasst, der ein erstes Ende, das auf den Schwenkpunkt (3, 103) des Schalthebels (2) wirkt, und ein zweites Ende, das in der Weise auf einen Führungsschlitz wirkt, dass die Schaltkraft, die notwendig ist, um die Gangschaltanordnung (1) zu steuern, eingestellt wird, besitzt.

9. Fahrzeug, das mit einer Gangschaltanordnung (1) nach einem der vorhergehenden Ansprüche versehen ist.

## Revendications

1. Ensemble de changement de vitesse (1) pour une boîte de vitesses d'une automobile, comprenant :
- un levier de changement de vitesse (2) conçu pour pivoter sur un point de pivotement (3, 103) comportant deux axes de pivotement (4, 5), un premier axe de pivotement (4) représentant un axe de sélection de vitesse et un second axe de pivotement (5) représentant un axe de changement de vitesse, et
- un schéma de changement de vitesse qui comprend au moins une grille de sélection de vitesse disposée dans une première direction et au moins une grille de changement de vitesse disposée dans une deuxième direction essentiellement perpendiculaire à la ou aux grilles de sélection de vitesse,
un mouvement de changement de vitesse (s) dans la direction de la ou des grilles de changement de vitesse et un mouvement de sélection de vitesse (v) dans la direction de la ou des grilles de sélection de vitesse pouvant être réalisés en pivotant le levier de changement de vitesse (2), le mouvement de sélection de vitesse (v) et le mouvement de changement de vitesse (s) étant séparés l'un de l'autre,
ledit levier de changement de vitesse (2) étant muni d'un mécanisme d'engrenage (6) autour de son point de pivotement (3, 103), de telle sorte que le mouvement de sélection de vitesse (v) puisse être transmis à une tringlerie de sélection de la boîte de vitesses par le biais d'une première crémaillère (7) et le mouvement de changement de vitesse (s) puisse être transmis à une tringlerie de changement de la boîte de vitesses par le biais d'une deuxième crémaillère (8),
ledit mécanisme d'engrenage (6) comprenant au moins un premier élément denté (9) qui est disposé de manière fixe du point de vue de la rotation sur un premier arbre (16, 116) dont l'axe de rotation est aligné avec ledit premier axe de pivotement (4), et un deuxième élément denté (10) qui est disposé de manière fixe du point de vue de la rotation sur un deuxième arbre (17, 117) dont l'axe de rotation est aligné avec ledit deuxième axe de pivotement (5), de telle sorte que le mouvement de sélection de vitesse (v) du levier de changement de vitesse (2) fait tourner ledit premier élément denté (9) et le mouvement de changement de vitesse (s) du levier de changement de vitesse (2) fait tourner ledit deuxième élément denté (10),
ledit premier élément denté (9) transmettant le mouvement de sélection de vitesse (v) du levier de changement de vitesse (2) à la première crémaillère (7), et
ledit deuxième élément denté (10) transmettant le mouvement de changement de vitesse (s) du levier de vitesse (2) à la deuxième crémaillère (8) par le biais d'un élément denté intermédiaire (31) qui est disposé à rotation sur le premier arbre (16, 116).

2. Ensemble de changement de vitesse (1) selon la revendication 1, dans lequel ladite première crémaillère (7) est disposée parallèlement à ladite deuxième crémaillère (8), et au moins l'un desdits premier et deuxième éléments dentés (9, 10) est un élément denté conique.

3. Ensemble de changement de vitesse (1) selon la revendication 2, dans lequel ledit élément denté conique (9, 10) agit sur un autre élément denté conique (30, 31) qui est associé à un pignon (11, 32), de telle sorte qu'une rotation dudit autre élément denté conique (30, 31) se traduit par une translation de la crémaillère respective (7, 8).

4. Ensemble de changement de vitesse (1) selon l'une quelconque des revendications précédentes, dans lequel lesdits premier et deuxième éléments dentés (9, 10) sont des roues dentées complètes ou des secteurs dentés.

5. Ensemble de changement de vitesse (1) selon l'une quelconque des revendications précédentes, dans lequel un ou plusieurs éléments dentés supplémentaires (30, 11) sont prévus entre le premier élément denté (9) et la première crémaillère (7) et/ou plusieurs éléments dentés supplémentaires (31, 32) sont prévus entre le deuxième élément denté (10) et la deuxième crémaillère (8).

6. Ensemble de changement de vitesse (1) selon l'une quelconque des revendications précédentes, dans lequel ledit point de pivotement (3) comprend :
• une extrémité sphérique (14) dudit levier de changement de vitesse (2), ladite extrémité sphérique (14) comportant une broche (15) disposée à l'opposé dudit levier de changement de vitesse (2),
• le premier arbre (16) qui est disposé perpendiculairement audit levier de changement de vitesse (2),
• le deuxième arbre (17) qui est disposé perpendiculairement audit levier de changement de vitesse (2) et audit premier arbre (16),
dans lequel chacun desdits premier et deuxième arbres (16, 17) comporte :
• une section cupuliforme (18, 19), dans laquelle ladite extrémité sphérique (14) est conçue pour se loger, et
• une ouverture allongée (20, 21) dans ladite section cupuliforme (18, 19) et dans la direction de la longueur de l'arbre respectif,
dans lequel lesdits premier et deuxième arbres (16, 17) sont disposés de telle sorte que l'une (20) desdites ouvertures allongées entoure ledit levier de changement de vitesse (2) et l'autre (21) desdites ouvertures allongées entoure ladite broche (15), de façon à ce qu'en inclinant le levier de changement de vitesse (2) dans la direction de la longueur dudit premier arbre (16), ledit deuxième arbre (17) tourne, et en inclinant ledit levier de changement de vitesse (2) dans la direction de la longueur dudit deuxième arbre (17), ledit premier arbre (16) tourne.

7. Ensemble de changement de vitesse (1) selon l'une quelconque des revendications 1 à 5, dans lequel ledit point de pivotement (103) comprend :
• une extrémité sphérique (114) dudit levier de changement de vitesse (2), ladite extrémité sphérique (114) comportant une broche (115) disposée à l'opposé dudit levier de changement de vitesse (2),
• un support fixe (122) comportant une ouverture circulaire dans laquelle ladite extrémité sphérique (114) est conçue pour se loger de sorte qu'elle puisse être supportée dans celle-ci,
• le premier arbre (116) qui est disposé perpendiculairement audit levier de changement de vitesse (2), et
• le deuxième arbre (17) qui est disposé perpendiculairement audit levier de changement de vitesse (2) et audit premier arbre (116),
dans lequel chacun desdits premier et deuxième arbres (116, 117) comporte :
• une section essentiellement en forme de U (118, 119), qui est conçue pour être disposée sous ledit support (122), l'une des sections en forme de U (119) étant disposée sous l'autre (118), et
• une ouverture allongée (120, 121) dans ladite section en forme de U et dans la direction de la longueur de l'arbre respectif (116, 117),
dans lequel lesdits premier et deuxième arbres (116, 117) sont disposés de telle sorte que lesdites ouvertures allongées (120, 121) entourent ladite broche (115), de façon à ce qu'en inclinant le levier de changement de vitesse (2) dans la direction de la longueur dudit premier arbre (116), ledit deuxième arbre (117) tourne, et en inclinant ledit levier de changement de vitesse (2) dans la direction de la longueur dudit deuxième arbre (117), ledit premier arbre (116) tourne.

8. Ensemble de changement de vitesse (1) selon l'une quelconque des revendications précédentes, comprenant en outre un piston comportant une première extrémité agissant sur ledit point de pivotement (3, 103) dudit levier de changement de vitesse (2) et une deuxième extrémité agissant sur une fente de guidage, de telle sorte que la force de changement requise pour commander l'ensemble de changement de vitesse (1) soit ajustée.

9. Véhicule doté d'un ensemble de changement de vitesse (1) selon l'une quelconque des revendications précédentes.
